# FASCICULE DE BREVET EUROPEEN

(11) **EP 3 534 500 B1**
(45) Date de publication et mention de la délivrance du brevet: **18.08.2021**
(21) Numéro de dépôt: 19159108.0
(22) Date de dépôt: 25.02.2019
(51) Int. Cl.: H02K 3/24, H02K 15/095, H02K 1/20, H02K 1/32, H02K 15/00, H02K 15/06

(54) **ROTOR OU STATOR BOBINE ET PROCEDE DE FABRICATION**
MIT EINER WICKLUNG VERSEHENER ROTOR ODER STATOR, UND HERSTELLUNGSVERFAHREN
WOUND ROTOR OR STATOR AND MANUFACTURING METHOD

(30) Priorité: 01.03.2018 FR 1851808
(43) Date de publication de la demande: 04.09.2019
(73) Titulaire: Moteurs Leroy-Somer, 16915 Angouleme (FR)
(72) Inventeur: SAINT-MICHEL, Jacques, 16000 ANGOULEME (FR)
(74) Mandataire: Nony

(56) Documents cités:
- EP-A1- 1 324 471
- EP-A1- 1 638 190
- WO-A1-2017/056985
- US-A1- 2011 001 372

## Description

La présente invention concerne la fabrication d'un rotor bobiné de machine électrique tournante. L'invention s'applique également à la réalisation d'un stator bobiné sur dent.

Il est connu de réaliser les rotors bobinés des moteurs à quatre pôles à l'aide d'une machine de bobinage comportant un bras agencé pour enrouler un fil sur toute la hauteur de chaque dent du rotor.

Une telle technique de bobinage, appelée « bobinage au flyer», est particulièrement rapide mais réservée aux machines à quatre pôles, car pour un nombre de pôles supérieur, les épanouissements polaires des dents gênent par leur proximité l'accès aux dents.

Par conséquent, les rotors des machines à plus de quatre pôles sont bobinés en utilisant des techniques plus complexes et l'opération de bobinage dure plus longtemps.

Un exemple de machine développée pour le bobinage de rotor à plus de quatre pôles est décrit dans le brevet US 4340186.

EP 1 324 471 divulgue un rotor bobiné comportant des dents pourvues d'épanouissements polaires. Les dents sont bobinées l'une après l'autre.

US 2011/001372 divulgue un rotor bobiné à quatre pôles.

Il existe un besoin pour améliorer encore les rotors bobinés et notamment simplifier leur fabrication et permettre à l'opération de bobinage d'être effectuée à une cadence élevée, tout en obtenant un facteur de remplissage relativement élevé.

L'invention répond à ce besoin grâce à un procédé de fabrication d'un rotor ou stator bobiné ayant plus de quatre pôles, le rotor ou stator comportant des dents pourvues d'épanouissements polaires, le procédé comportant les étapes suivantes, pour chaque pôle :
a) Réaliser une bobine partielle en bobinant au moins un conducteur sur la portion de la dent de ce pôle s'étendant axialement le long de ce pôle entre les épanouissements polaires de ce pôle et un plan perpendiculaire à l'axe du pôle et tangent à un épanouissement polaire d'un pôle adjacent,
b) repousser la bobine partielle ainsi réalisée vers la base de la dent, et libérer ladite portion de la dent ayant servie au bobinage,
c) répéter l'étape a) pour réaliser une autre bobine partielle sur la portion de dent ainsi libérée.

L'invention permet de continuer à bénéficier des avantages de la technique de bobinage au flyer malgré la polarité plus élevée du rotor ou stator.

Le bobinage de chaque bobine partielle peut s'effectuer sur toute la longueur de ladite portion, ce qui correspond à toute la fenêtre de bobinage, ou en variante sur une partie seulement de cette portion. Dans ce cas, on n'exploite pas toute la largeur de la fenêtre de bobinage.

L'étape b) ci-dessus est relativement simple à effectuer de façon automatisée, et ne ralentit pas outre mesure la durée de fabrication du rotor ou stator.

On peut profiter de la présence de bobines partielles mettre en place une entretoise entre deux bobines partielles d'un même pôle. Cette entretoise peut aider à bloquer axialement les bobines partielles sur la dent et peut contribuer au refroidissement du rotor ou stator, notamment lorsqu'elle est parcourue par au moins un canal de circulation d'un fluide de refroidissement, en particulier d'air.

L'invention permet de réaliser facilement des bobines partielles à conducteurs rangés, ayant un bon coefficient de remplissage.

L'invention convient tout particulièrement aux rotors ou stators ayant six pôles, mais peut s'appliquer à d'autres machines ayant plus de quatre pôles. Le rotor ou stator peut être bobiné pôle après pôle. En variante, plusieurs pôles sont bobinés simultanément, en particulier les pôles diamétralement opposés.

Chaque pôle peut ne comporter que deux bobines partielles. Cela peut être le cas notamment des rotors ou stators à six pôles, pour lesquels l'écartement entre les épanouissements polaires permet de réaliser des bobines partielles relativement hautes.

Deux bobines partielles peuvent être réalisées avec continuité du fil conducteur entre les deux. Autrement dit, le fil conducteur n'est pas coupé d'une bobine partielle à l'autre. On peut bobiner la première bobine partielle, puis sans couper le fil, bobiner la deuxième bobine partielle.

La présente description décrit également un rotor ou stator de machine électrique tournante à plus de quatre pôles, qui n'est pas revendiqué, obtenu par la mise en œuvre du procédé selon l'invention, tel que défini ci-dessus, comportant :
- des dents pourvues d'épanouissements polaires,
- au moins deux bobines partielles disposées l'une dans le prolongement de l'autre sur chaque dent.

Le rotor ou stator peut présenter six dents exactement.

Le rotor ou stator peut comporter une entretoise entre les deux bobines partielles de chaque pôle, voire en cas de plus de deux bobines partielles par pôle, entre au moins deux bobines partielles de ce pôle, ou entre toutes les bobines partielles de ce pôle.

L'entretoise précitée est de préférence parcourue par au moins un canal d'aération.

Les bobines partielles sont de préférence reliées électriquement en série.

Une feuille d'un matériau à faible coefficient de friction peut être interposée entre les bobines partielles et la dent correspondante. Une telle feuille peut faciliter le glissement de la bobine partielle lorsqu'elle est repoussée en direction de la base de la dent au cours de la fabrication du rotor ou stator selon le procédé défini ci-dessus.

Chaque pôle peut avoir exactement deux bobines partielles, mais la présente description englobe également des variantes à plus de deux bobines partielles par pôle.

L'invention pourra être mieux comprise à la lecture de la description détaillée qui va suivre, d'un exemple de mise en œuvre non limitatif de celle-ci, et à l'examen du dessin annexé, sur lequel :
- la figure 1 représente de façon schématique en perspective un exemple de rotor obtenu par la mise en œuvre du procédé selon l'invention ,
- la figure 2 est une section transversale du rotor de la figure 1,
- la figure 3 représente un détail de la figure 2,
- la figure 4 représente isolément le noyau du rotor, et
- les figures 5A à 5D illustrent le procédé de bobinage du rotor.

Le rotor 1 obtenu par la mise en œuvre du procédé selon l'invention représenté sur les figures comporte un noyau magnétique 10, encore appelé armature, qui peut être formé par un paquet de tôles magnétique superposées.

Ce noyau magnétique 10 comporte des dents 11 reliées à leur base par une partie annulaire 12 pourvue d'une ouverture centrale 13 pour le montage d'un arbre, non représenté.

Dans l'exemple considéré, le rotor 1 est à six pôles et comporte six dents 11.

Des canaux d'aération 14 peuvent être réalisés entre les dents 11, comme illustré. Ces canaux 14 peuvent être formés entre la partie annulaire 12 et une cloison 16 orientée perpendiculairement à l'axe longitudinal X de la dent 11 attenante.

Dans l'exemple illustré, chaque dent 11 présente à sa base deux canaux 14 de chaque côté, étant entendu que d'autres agencements sont possibles, sans canaux d'aération, ou avec un nombre différent de canaux.

Chaque dent 11 présente, à son extrémité radialement la plus extérieure, deux épanouissements polaires 17, encore appelés cornes polaires.

Le bord 18 radialement extérieur de chaque dent est de préférence circulaire, centré sur l'axe de rotation du rotor. Les faces radialement intérieures 19 des épanouissements polaires 17 sont de préférence, comme illustré, perpendiculaires à l'axe longitudinal X de la dent 11 correspondante.

Chaque dent 11 porte un bobinage de pôle 20 formé de deux bobines partielles 20a et 20b reliées électriquement en série et reliées électriquement aux autres pôles, généralement en série, ou variante avec deux voies parallèles, et dans ce cas, préférentiellement en série avec les pôles de même nom.

La bobine 20a, radialement la plus intérieure, est en appui sur les cloisons 16 situées à la base de la dent 11 correspondante.

La bobine 20b, radialement la plus extérieure, est en appui sur les faces 19 des épanouissements polaires 17.

Le cas échéant, une feuille d'un matériau isolant électrique non représentée, est interposée entre le noyau magnétique et chaque bobine partielle.

Des entretoises 25 peuvent être intercalées, comme illustré, entre les bobines partielles 20a et 20b d'un même pôle, pour maintenir les bobines 20a et 20b en place.

Ces entretoises 25 sont de préférence réalisées en un matériau bon conducteur de la chaleur tel que de l'aluminium et sont parcourues par au moins un canal d'aération, par exemple deux canaux 26 comme illustré.

Des dissipateurs thermiques 30 à ailettes peuvent être fixés contre les bobines partielles 20a et 20b dans l'espace inter-polaire 31, comme illustré.

Ces dissipateurs 30 peuvent venir en appui par leur bord longitudinal radialement le plus extérieur contre la face 19 de l'épanouissement polaire 17 adjacent, et s'étendre radialement vers l'intérieur jusque sensiblement la cloison 16 adjacente.

Les ailettes des dissipateurs 30 peuvent être de hauteur variable de façon à ce que l'intervalle ménagé entre deux dissipateurs 30 logés dans un même espace inter-polaire 31 soit sensiblement de largeur constante, comme illustré.

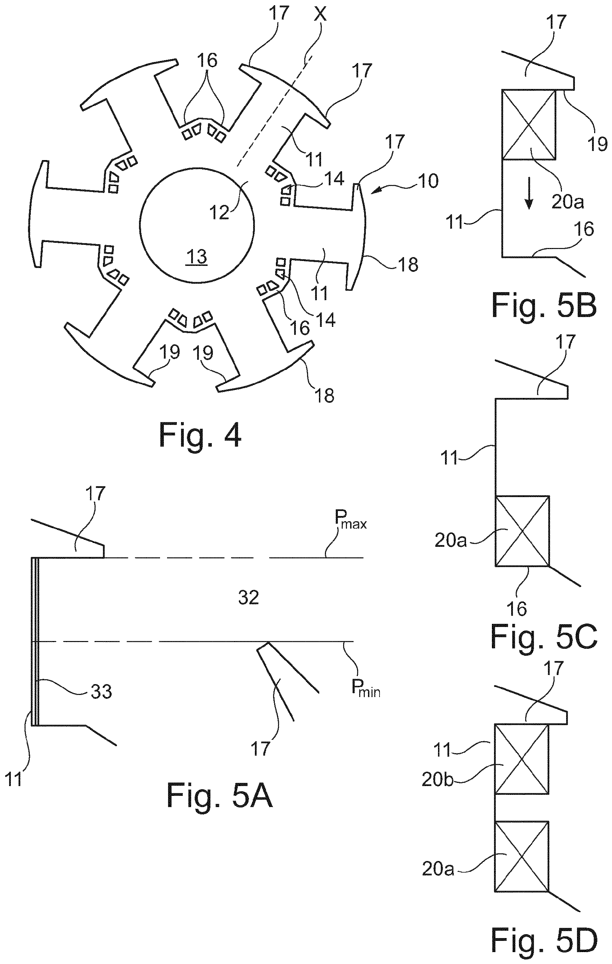

On va maintenant décrire en se référant aux figures 5A à 5D le procédé de fabrication du rotor 1.

Sur la figure 5A, on a matérialisé par des plans Pₘₐₓ et Pₘᵢₙ l'intervalle disponible pour le bobinage de la dent en enroulant au moins un fil conducteur autour de la dent. Cet intervalle délimite axialement une portion 32 de la dent 11 qui va servir au bobinage de la première bobine partielle 20a.

Pour réaliser cet enroulement, on peut utiliser la technique dite du « bobinage au flyer », qui consiste à employer un bras mobile tournant autour de la dent.

On peut disposer autour de la dent 11, le cas échéant, comme illustré sur la figure 5A, une feuille de glissement 33, par exemple en PTFE. Cette feuille n'a pas été représentée sur les autres figures.

On a représenté sur la figure 5B la dent 11 après la réalisation de la première bobine partielle 20a, entre les plans Pₘₐₓ et Pₘᵢₙ. Cette première bobine partielle 20a peut présenter un bobinage rangé, avec un fil conducteur de section circulaire ou non circulaire, par exemple carrée ou rectangulaire.

Une fois la bobine partielle 20a réalisée, on la déplace le long de la dent 11 vers la base de celle-ci, jusqu'à butée contre la cloison 16.

Ce déplacement peut s'effectuer par exemple à l'aide d'un élément introduit avant le bobinage sous l'épanouissement polaire 17 ou à l'aide d'une mâchoire qui saisit la bobine partielle et l'entraine vers la base de la dent.

Une fois la bobine partielle 20a en fond d'encoche, comme illustré à la figure 5C, on peut procéder au bobinage de la deuxième bobine partielle 20b au même endroit sur la dent 11 que la première bobine partielle 20a, comme illustré à la figure 5D.

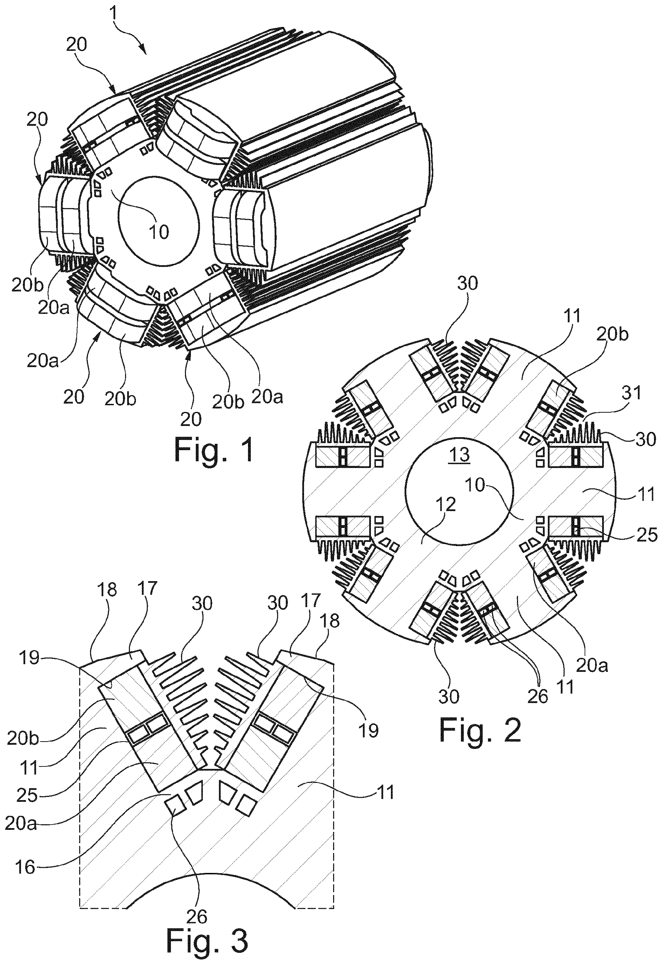

Ensuite, la ou les entretoises 25 peuvent être mises en place, puis les dissipateurs 30, pour obtenir l'agencement illustré à la figure 3.

Le nombre de spires d'une bobine partielle va par exemple de 10 à 200. Le diamètre sur cuivre du fil va par exemple de 0.315 mm à 1.6 mm. Bien entendu, l'invention n'est pas limitée à l'exemple illustré.

Ce qui vient d'être décrit en référence aux figures s'applique au bobinage d'une armature de stator.

Par ailleurs, on peut disposer plus de deux bobines partielles sur chaque dent, ou donner au noyau d'autres formes, avec par exemple des épanouissements polaires ayant des dimensions différentes d'une dent à l'autre.

On peut réaliser les bobines partielles sur une hauteur inférieure à la largeur de la fenêtre de bobinage donnée par les plans Pₘₐₓ et Pₘᵢₙ, par exemple parce que la face intérieure 19 des épanouissement polaires n'est plus plane et perpendiculaire à l'axe radial X de la dent mais concave vers l'axe de rotation, de manière à ménager par exemple des canaux de ventilation, ou si l'on souhaite plusieurs canaux inter-bobines.

Les bobines partielles peuvent être de hauteurs inégales, le cas échéant, dans le cas de stators en particulier.

On peut donner aux dents une forme hélicoïdale, pour réduire les ondulations de couple.

## Revendications

1. Procédé de fabrication d'un rotor ou stator bobiné (1) ayant plus de quatre pôles, de préférence un rotor, le rotor ou stator comportant des dents (11) pourvues d'épanouissements polaires (17), le procédé comportant les étapes suivantes, pour chaque pôle :
a) Réaliser une bobine partielle (20a) en bobinant au moins un conducteur sur la portion (32) de la dent de ce pôle s'étendant axialement le long de ce pôle entre les épanouissements polaires (17) de ce pôle et un plan (Pₘᵢₙ) perpendiculaire à l'axe du pôle et tangent à un épanouissement polaire (17) d'un pôle adjacent,
b) repousser la bobine partielle (20a) ainsi réalisée vers la base de la dent, et libérer ladite portion (32) de la dent ayant servie au bobinage,
c) répéter l'étape a) pour réaliser une autre bobine partielle (20b) sur la portion de dent ainsi libérée.

2. Procédé selon la revendication 1, comportant la mise en place d'une entretoise (25) entre les bobines partielles (20a, 20b) d'un même pôle.

3. Procédé selon l'une des revendications précédentes, le rotor ou stator ayant six pôles.

4. Procédé selon l'une quelconque des revendications précédentes, le rotor ou stator étant bobiné pôle après pôle.

5. Procédé selon l'une quelconque des revendications précédentes, chaque pôle ne comportant que deux bobines partielles (20a, 20b).

## Patentansprüche

1. Verfahren zur Herstellung eines mit einer Wicklung versehenen Rotors oder Stators (1), der mehr als vier Pole hat, vorzugsweise eines Rotors, wobei der Rotor oder der Stator Zähne (11) aufweist, die mit Polschuhen (17) versehen sind, wobei das Verfahren für jeden Pol die folgenden Schritte umfasst:
a) Erzeugen einer Teilwicklung (20a), indem mindestens ein Leiter auf den Teil (32) des Zahns dieses Pols gewickelt wird, der sich axial entlang diesem Pol zwischen den Polschuhen (17) dieses Pols und einer Ebene (Pₘᵢₙ) erstreckt, die senkrecht zur Achse des Pols und tangential zu einem Polschuh (17) eines benachbarten Pols verläuft,
b) Zurückschieben der so erzeugten Teilwicklung (20a) zum Fuß des Zahns und Freilegen des Teils (32) des Zahns, der für die Wicklung verwendet worden war,
c) Wiederholen von Schritt a), um eine andere Teilwicklung (20b) auf dem so freigelegten Zahnteil zu erzeugen.

2. Verfahren nach Anspruch 1, das das Platzieren eines Abstandsstücks (25) zwischen den Teilwicklungen (20a, 20b) eines gleichen Pols umfasst.

3. Verfahren nach einem der vorhergehenden Ansprüche, wobei der Rotor oder Stator sechs Pole hat.

4. Verfahren nach einem der vorhergehenden Ansprüche, wobei der Rotor oder Stator Pol für Pol gewickelt wird.

5. Verfahren nach einem der vorhergehenden Ansprüche, wobei jeder Pol nur zwei Teilwicklungen (20a, 20b) umfasst.

## Claims

1. Method for manufacturing a wound rotor or stator (1) having more than four poles, preferably a rotor, the rotor or stator comprising teeth (11) provided with pole shoes (17), the method comprising the following steps, for each pole:
a) producing a partial winding (20a) by winding at least one conductor over the portion (32) of the tooth of this pole extending axially along this pole between the pole shoes (17) of this pole and a plane (Pₘᵢₙ) at right angles to the axis of the pole and tangential to a pole shoe (17) of an adjacent pole,
b) pushing back the duly produced partial winding (20a) towards the base of the tooth, and freeing said portion (32) of the tooth having been used for the winding,
c) repeating the step a) to produce another partial winding (20b) on the duly released portion of tooth.

2. Method according to Claim 1, comprising the placing of a spacer (25) between the partial windings (20a, 20b) of one and the same pole.

3. Method according to any one of the preceding claims, the rotor or stator having six poles.

4. Method according to any one of the preceding, the rotor or stator being wound pole after pole.

5. Method according to any one of the preceding, each pole comprising only two partial windings (20a, 20b).
